# EUROPEAN PATENT APPLICATION

(11) **EP 0 668 451 A1**
(43) Date of publication of application: **23.08.1995**
(21) Application number: 95300867.9
(22) Date of filing: 13.02.1995
(51) Int. Cl.: F16C 33/78

(54) **Bearing sealing device and method of manufacture thereof**

(30) Priority: 16.02.1994 JP 43055/94
(71) Applicant: UCHIYAMA MANUFACTURING CORP., Okayama-shi, Okayama (JP)
(72) Inventor: Arai, Junichi, 1106-11 Ookanda,Akasaka-cho Okayama (JP)
(74) Representative: Maury, Richard Philip

(57) **Abstract**

A bearing sealing device includes a sealing member having a sealing lip and a backing ring, and is adapted to be mounted in an outer and inner races rotating relative to each other on the bearing assembly for sealing it. The bearing sealing device provides improved sealing performance, and enhanced firmness to the bearing assembly. Such bearing sealing devices may be manufactured continously on the massive production system without requiring any finishing steps subsequent to the molding and press-punching steps.

A method of manufacturing a bearing sealing device includes forming a backing blank (a1) from iron, forming two elastic sealing members (b1,b2) to different thickness and securing each of the two elastic sealing members (b1,b2) to each respective one of the opposite sides of the backing blank (a1), thereby forming a single integral unit, and using the press punch to punch the single integral unit so that the resulting shape includes a backing ring, an inner elastic ring (b2) having a relatively great thickness and located inside the backing ring (a1), and an outer elastic ring (b1) having a relatively small thickness, the inner elastic ring (b2) having a sealing lip (6) formed around the peripheral margin thereof and extending outwardly beyond the peripheral margin of the backing ring (a1).

## Description

### BACKGROUND OF THE INVENTION

### Field of the Invention

The present invention relates to a bearing sealing device for sealing the bearing assembly having an inner race, an outer race and an annular groove formed in one of the inner and outer races, and it also relates to a method of manufacturing the same. More particularly, the bearing sealing device includes a sealing member having a sealing lip and a backing ring that supports the sealing member, and may be mounted in the outer race and the inner race rotating relative to each other on a bearing assembly. The device can firmly be secured to the outer and inner races in the bearing assembly, thereby sealing it very well. The method provides such bearing sealing devices on a massive, continuous production system without requiring any finishing steps subsequent to the molding step.

### Description of the Prior Art

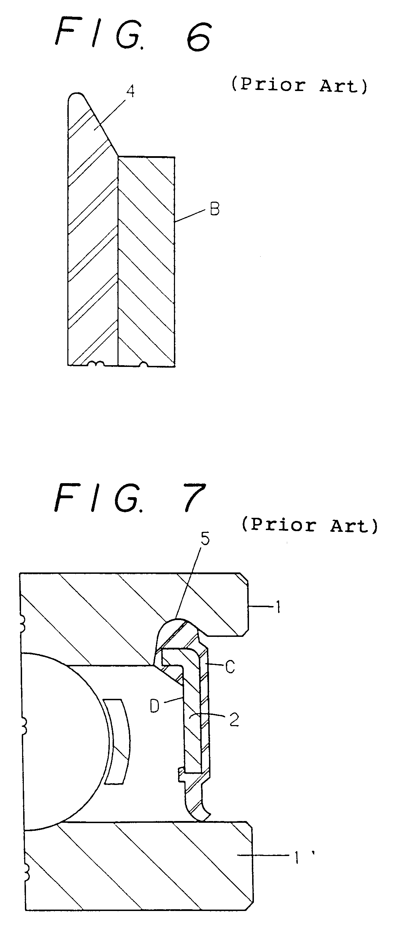

A conventional bearing sealing device that is mounted in the outer race and inner race on the bearing assembly is shown in Fig. 7. As shown, the bearing sealing device includes a backing ring 2 formed to the annular shape and a sealing member C formed to include a sealing lip. In the conventional bearing sealing device, the backing ring 2 previously formed to the annular shape is vulcanized by adding an elastic sealing material, and is then molded by using the metal mold into the shape of a bearing seal D.

When molding the bearing seal D as described above, the backing ring 2, which has previously been formed to the appropriate shape, must first be placed accurately within the metal mold, followed by adding a sealing material thereto. The backing ring 2 must then be molded and hardened within the metal mold. The baking ring 2 that results from the molding and hardening process must be removed from the metal mold. Those steps are complicated and time consuming, and any extra portion of the sealing material added might produce burrs on the molded product inside and outside it. Thus, an additional step is required to remove those burrs from the product until the finished product is finally obtained. This step is often difficult and tedious.

To eliminate the above difficulties, there is another conventional bearing seal disclosed in Japanese patent unexamined publication No. 54 (1979)-68882, as shown in Fig. 5. As disclosed in this patent publication, the backing ring a with the sealing material b added thereto is pressed and punched out by means of the press punch 3, and the bearing seal B is obtained as shown in Fig. 6. This patent publication also discloses the method of manufacturing such bearing seals.

The bearing seal B as disclosed in the above patent publication is formed by using the simple punching method, so that the shape in cross section of the sealing lip 4 thus formed is limited to one particular shape as shown in Fig. 6. It is therefore difficult to form the sealing lip 4 into other different shapes, such as bent, forked and like. Thus, it is difficult to form the sealing lip 4 having various shapes such as bending or forked which can perform the act of the sealing lip.

In mounting the bearing seal B on the bearing assembly according to the above prior art, the sealing material b that is located inside is inserted into the outer and inner races 1, 1' toward the rear thereof until it engages its fitting groove provided in one of the outer and inner races 1, 1'. When the bearing seal B is fitted, some of the sealing lip 4 of the sealing material b is forced out from the fitting groove like a hump which surrounds and embraces the peripheral margin of the backing ring. As there is no means that is designed specifically to maintain the shape of the sealing lip 4 embracing the peripheral margin of the backing ring as it was deformed during the fitting process, the shape deformed will tend to be restored gradually to its original shape as the time elapses. Thus, the sealing material b might lose some of its sealing capability.

### SUMMARY OF THE INVENTION

In order to overcome the deficiencies of the prior art as described above, it is the primary object of the present invention to provide a bearing sealing device that can be easily molded to the shape, and can be secured firmly to the bearing assembly, including a sealing lip that can be formed to various shapes.

In achieving the above object, the present invention relates generally to a bearing sealing device that includes a sealing material formed to include a sealing lip and a backing ring that supports the sealing material, and may be mounted in the outer and inner races 1, 1' on the bearing assembly for sealing purposes, wherein an elastic sealing material is attached to a backing blank made of iron or the like, and a bearing seal may be obtained by using the press punch so that it includes an elastic ring and a backing ring. Specifically, the present invention provides the bearing sealing device that includes a metal backing blank a and an elastic sealing material b formed to a different thickness and attached to each respective one of the opposite sides of the metal backing blank a. The metal backing blank a having the elastic sealing material b on each of the opposite sides thereof is then punched out by means of the press punch 3, so that the resulting shape includes elastic rings b1 and b2, and backing ring a1 sandwiched by the elastic rings b1 and b2. The elastic ring b1 that is located outside the backing ring a1 may be formed to a relatively small thickness, and the elastic ring b2 that is located inside may be formed to a relatively great thickness. The inner elastic ring b2 has a sealing lip 6 formed around the peripheral edge thereof and extending outwardly beyond the peripheral edge of the backing ring a1.

In mounting the bearing seal A of the present invention which is manufactured as the before described in the outer and inner races 1, 1' on the bearing assembly, the inner elastic ring b2 may be inserted into the outer and inner races toward a fitting groove provided on the outer race 1 until it can be fitted in and engage the fitting groove. When the inner elastic ring b2 is being fitted in the fitting groove, the sealing lip 6 on the inner elastic ring b2 may become deformed toward the backing ring a1 by its soft elasticity, surrounding and embracing the peripheral edge of the backing ring a1. Then, the sealing lip 6 may become further deformed, embracing the peripheral edge of the outer elastic ring b1. Thus, the bearing seal A is completely mounted on the bearing assembly.

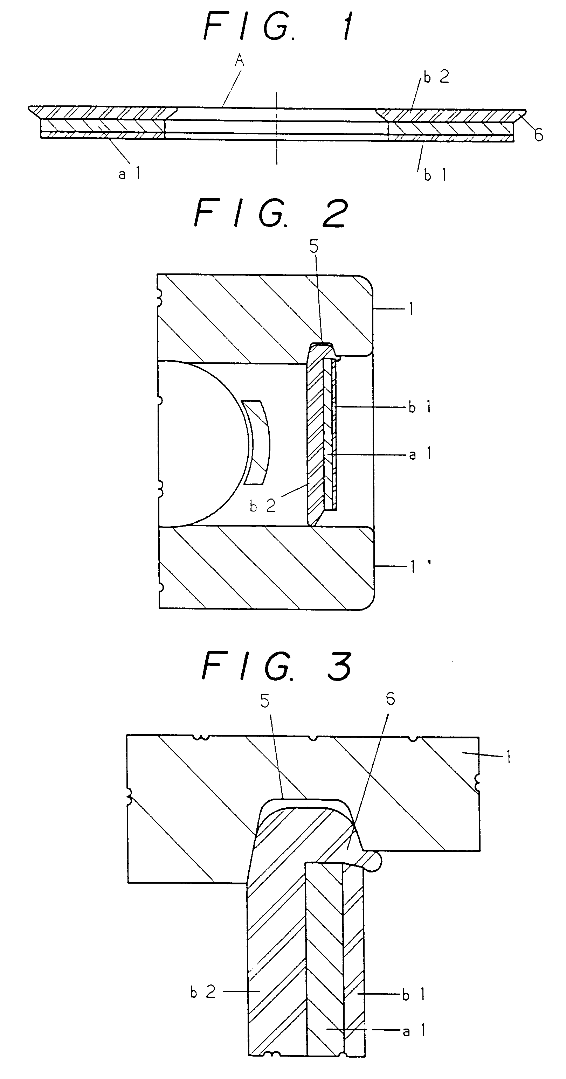

The sealing lip 6 embracing the backing ring a1 and outer elastic ring b1 can closely engage the peripheral edge of the outer elastic ring b1 (Fig. 3), and the sealing lip 6 can be firmly secured to the outer elastic ring b2 by the adhesiveness of the respective materials from which the respective sealing lip and outer elastic ring are made.

The present invention also provides the method of manufacturing a bearing seal A described above that may be mounted in the outer and inner races 1, 1' on the bearing assembly, thereby sealing the bearing assembly hermetically. The method consists generally of combining a backing blank made usually of iron with an elastic sealing material and punching out said combination of the backing blank and elastic sealing material by means of the press punch. The bearing seal A thus obtained includes an elastic ring and a backing ring. More particularly, the present invention provides the method wherein it consists of forming a relatively thin sealing material layer b upon one side of a metal backing blank a made usually of iron and a relatively thick sealing material layer b upon the opposite side of the metal backing blank a so that they can be combined together. The metal backing blank a having the sealing material layers b, b on the opposite sides thereof thus combined together is next punched out by means of the press punch 3. The bearing seal A thus obtained includes a backing ring a1, and an outer elastic ring b1 formed to a relatively small thickness and an inner elastic ring b2 formed to a relatively great thickness, both of which sandwich the backing ring a1 therebetween, the inner elastic ring b2 including a sealing lip 6 around the peripheral margin thereof and extending beyond the peripheral margin of the backing ring a1.

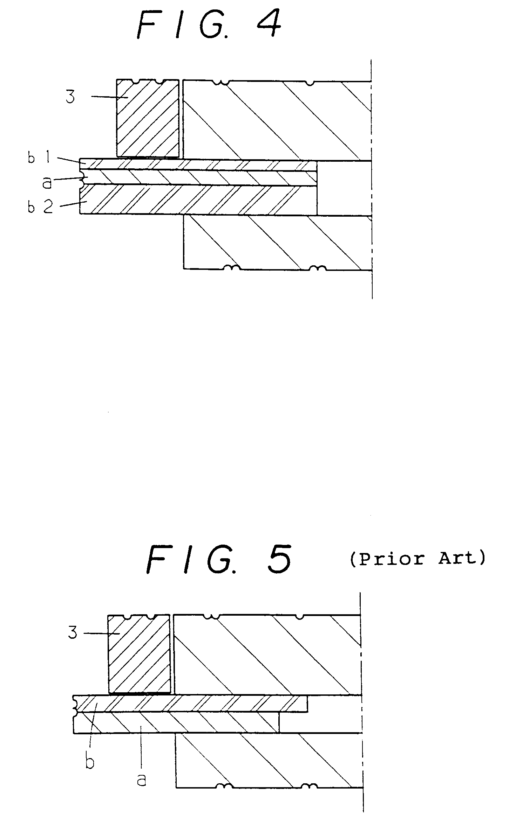

In the above description, the thin sealing material layer b is secured to one side of the backing blank a which will be located on the inner side of the backing ring a1 during the molding process, and the thick sealing material layer b is secured to the opposite side of the backing blank a that will be located on the outer side of the backing ring a1. The amount of deformation due to compression and the elastic repulsion that may occur in the sealing material layers on the opposite sides of the backing blank a during the punching process by using the press punch as shown in Fig. 4 will therefore vary, depending upon the respective different thickness of the sealing material layers. Thus, the punching may be performed by taking into account the differences in the amount of deformation due to compression and elastic repulsion for the sealing material layers that may occur, depending upon the different thicknesses thereof. When the punching actually occurs, the backing ring a1 may be sandwiched by the elastic rings b1, b2, and the elastic ring b1 that is located outside the backing ring may become thin and the elastic ring b2 that is located inside may become thick. Then, the inner elastic ring b2 may have a sealing lip 6 formed around the peripheral margin thereof and extending outwardly beyond the peripheral margin of the backing ring a1. In other words, as the side of the backing blank a that will be located on the inner side of the backing ring a1 when the molding occurs will have the thick sealing material layer b on that side, the deformation due to compression and the elastic repulsion will effectively occur when the punching is performed by the press punch 3. Thus, the inner elastic ring b2 having the sealing lip 6 around the peripheral margin thereof can be formed such that the sealing lip 6 may extend beyond the peripheral margin of the backing ring a1. Whereas, the side of the backing blank a that will be located on the outer side of the backing ring a1 when the molding occurs will have the thin sealing material layer b on that side. For the thin sealing material layer, no deformation due to compression and no elastic repulsion will occur when the punching is performed, as the sealing material layer is thin. Thus, the outer elastic ring b1 obtained by the punching will have the diameter substantially equal to that of the backing ring a1 (Figs. 1, 2 and 3).

In the above description, rigid metals such as thin plates and strips may be used for the backing blank a, and synthetic rubber or any other elastic synthetic resin materials may be used for the sealing material b.

Particular advantages and merits of the bearing sealing device according to the present invention are described. When the bearing seal A is mounted in the outer and inner races 1, 1' on the bearing assembly, the sealing lip 6 formed on the inner elastic ring b2 and extending beyond the peripheral margin of the backing ring a1 can surround and embrace the peripheral margin of the backing ring a1 and then the peripheral margin of the outer thin elastic ring b1, bringing the elastic rings b1, b2 into close contact at the extremities of the respective peripheral margins thereof. Thus, they can adhere to each other along the respective peripheral marginal extremities by the adhesiveness of the materials from which they are made. This state can be retained for any long-term service. Thus, the firmness can be achieved. It may be appreciated that the bearing sealing device A according to the present invention provides significantly improved sealing performance and slip torque characteristics. It can thus resist any vibrations that may occur under any changes in the load such as the changes in the applied pressure, and will never slip out under such situations.

The method of manufacturing the bearing sealing device A according to the present invention is advantageous in that such bearing seals A can be manufactured continuosly and massively without any finishing step, such as any deburring, subsequent to the molding and punching steps. According to the method, sealing material layers of a different thickness may be formed and secured to the opposite sides of a backing blank a, and the backing blank a with the sealing material layers on the opposite sides may be punched out by using the press punch. The bearing seal A thus obtained provides improved sealing performance and slip torque charactristics, and can resist any vibrations caused by the change in the load and will not slip out when it is mounted in the outer and inner races on the bearing assembly.

As another advantage, the bearing seal A is highly moldable, and can be protected by the outer elastic ring b1 from any corrosion due to the muds or the like from the outside.

The hue, brightness and light reflection for the outer elastic ring b1 may be adjusted, and it is very helpful when the bearing seal A is examined by the image processing. Thus, the outer elastic ring may be used as the surface material.

Furthermore, the outer elastic ring b1 may be marked by the metal molding for the identifying purpose.

### BRIEF DESCRIPTION OF DRAWINGS

Those and other objects, advantages and features of the present invention may readily be understood from the detailed description of the preferred embodiments that follows by reference to the accompanying drawings, in which:
Fig. 1 is a sectional view illustrating the bearing sealing device according to one embodiment of the present invention;
Fig. 2 is a partial sectional view illustrating how the bearing sealing device is mounted in the bearing assembly;
Fig. 3 is a partial sectional view showing part of Fig. 2 on an enlarged scale;
Fig. 4 is a partial sectional view illustrating the molding process according to the present invention;
Fig. 5 is a partial sectional view illustrating the molding process according to the prior art;
Fig. 6 is a partial sectional view illustrating the prior art bearing seal obtained by the molding process of Fig. 5; and
Fig. 7 is a partial sectional view illustrating how the prior art bearing seal other than the one in Fig. 6 is mounted on the bearing assembly.

### DETAILS OF PREFERRED EMBODIMENTS

Referring now to Figs. 1 through 4, a particular preferred embodiment of the present invention is described below.

As seen from Fig. 4, any suitable sealing material with a different thickness, b1, b2, is applied to each respective one of the opposite sides of a backing blank a, and is secured thereto. Then, the backing blank a having the sealing material layers b1, b2 on the opposite sides thereof is punched out by using the press punch 3. A backing ring a1 is thus obtained, including elastic rings b1, b2 on the opposite sides. As shown in Fig. 1, the bearing seal A obtained by the press punch includes a backing ring a1, an inner elastic ring b2 formed to a relatively great thickness inside the backing ring a1 and having a sealing lip 6 around the peripheral margin thereof extending beyond the peripheral margin of the backing ring a1, and an outer elastic ring b1 formed to a relatively small thichness outside the backing ring a1 and having the diamater substantially equal to that of the backing ring a1.

In designing the bearing sealing device A according to the present invention, the preferred dimensional relationships between the backing ring a1 and the outer and inner elastic rings b1, b2 in respect of the respective thicknesses thereof is such that the outer elastic ring b2 is formed to a smaller thickness than the inner elastic ring b1. For practical purposes, however, it should be noted that those dimensional relationships are not important from the disposition of them relative to each other. The important is that the backing ring a1 should be strong enough to support the outer and inner elastic rings b1, b2, the inner elastic ring b2 should be thick enough to allow the sealing lip 6 to be formed around the peripheral margin thereof, and the outer elastic ring b1 should be thin enough to allow it to make close contact with the peripheral marginal extremity of the sealing lip 6 that surrounds and embraces the peripheral margin of the backing ring a1 when the bearing seal A engages the outer and inner races on the bearing assembly, thereby preventing the bearing seal A from slipping out, and protecting the bearing seal A from any corrosion. Thus, the outer elastic ring b1 may be thin relative to the inner elastic ring b2.

To aid in better understanding the effects of the present invenion, an example of the embodiment is shown and described. When a bearing seal A has the diameter of 10 mm, the effects of the present invention as described above may be provided by setting the thickness of a backing ring a1 to any value between 0.1 mm and 0.2 mm, the thickness of an outer elastic ring b1 to any value between 5.0 µm and 15 µm, and the thickness of an inner elastic ring b2 to any value between 0.2 mm and 0.3 mm.

In designing the outer elastic ring b1 according to the particular specifications, it may be made of any materials having the good antislip characteritics such as the thermosetting resins, or any materials having the increased anticorrosion effect. Any coloring materials may also be used for the identifying purpose.

As some typical examples of the antislip resin material, there are the synthetic resins such as the vinyl chloride, polyester, epoxy, and urethan that may provide the good antislip characteristics. The choice of those materials may depend upon the external factors such as the desired performance of the bearing seal and where the bearing seal will be mounted.

In the embodiment described above, it is shown that the outer diameter side of the bearing seal A includes the part that engages the fitting groove 5 in the outer race 1 of the bearing assembly, that is, the sealing lip 6 extending from the peripheral margin. The embodiment may be varied such that the sealing slip 6 is provided on the inner diameter side.

The bearing seal A of the present invention is very useful when it is mounted on miniature bearing assemblies.

In the conventional bearing seal as shown in Fig. 6 where the sealing material is only secured to one side of the backing ring, the sealing lip 4 is forced out as the hump from the fitting groove so that it can surround and embrace the peripheral marginal extremity of the backing ring when it is mounted in the outer and inner races of the bearing assembly. In this bearing seal, the requirement for ensuring the good sealing and engaging performance is that there must exist the adequate relationship between the volume of the part of the peripheral margin of the sealing lip 4 that remains in the fitting groove and the volume of the part of the peripheral margin of the sealing lip 4 that is forced out as the hump to surround and embrace the peripheral margin of the backing ring, thereby preventing the bearing seal from being slipped out. As described in the section "BACKGROUD" of the specification, the conventional bearing sealing device shown in Fig. 6 is not designed specifically to include the means for maintaining the shape of the part of the peripheral margin of the sealing lip 4 forced out to surround and embrace the peripheral margin of the backing ring. Thus, there is the need for maintaining the exact volume relationship as described above. To meet the need, the fitting groove that is provided in either of the outer and inner races must be formed with high dimensional precision so that the accurate volume relationship can be ensured.

Practically, it is difficult to provide the fitting groove with the high dimensional precision as the before described, particularly when the bearing seal is used on the miniature bearing assembly. For this reason, the conventional bearing seal shown in Fig. 6 cannot be mounted on very small devices, such as the miniature bearing assembly, which include parts that must be machined with the high dimensional precision and are required to be sealed by such seals. It is of no utility in those applications.

According to the bearing seal A of the present invention, the sealing lip 6 that surrounds and embraces the peripheral margin of the backing ring a1 when the seal is mounted can make close contact with the peripheral marginal extremity of the outer elastic ring b1 located outside the backing ring a1 (see Fig. 3). Thus, the strong firmness can be achieved by the mutual adhesiveness of the respective materials. The bearing sealing device A according to the present invention can even be mounted on the fitting groove in the miniature bearing assembly that cannot be machined with the high dimensional precision, and can provide the high sealing performance in this case. It is of utility in such applications.

The firmness of the bearing seal A of the present invention to the outer and inner races 1, 1' on the bearing assembly may be adjusted and may easily be varied by adjusting the thickness and/or hardness of the elastic rings b1, b2. So that, when the firmness is adjusted, it is not necessary to increase or decrease the contact area between the fitting groove or the fitting shelf (not identified by the number) and the bearing seal.

Although the present invention has been described with reference to the particular preferred embodimens and the variations thereof, it should be understood that various changes and modifications may be made without departing from the scope of the invention as defined in the appended claims.

## Claims

1. In a bearing sealing device including a sealing member having a sealing lip and a backing ring for sealing the bearing assembly having an inner race, an outer race and an annular groove formed in one of the inner or outer race and adapted to be mounted in the outer and inner races on the bearing assembly, wherein a backing blank of metal and an elastic sealing material are molded such that the backing blank has the elastice sealing material secured thereon, and is punched out into a bearing seal that includes an elastic ring and a backing ring, the bearing sealing device including:
a backing blank formed of metal;
elastic sealing means having a different thickness secured to each respective one of the opposite sides of said backing blank; and
said backing blank having said elastic sealing means secured to the opposite sides thereof being punched out such that the resulting shape includes a backing ring and two elastic rings sandwiching said backing ring therebetween, the elastic ring located outside said backing ring, or the outer elastic ring, being formed to a relatively small thickness and the elastic ring located inside said backing ring, or the inner elastic ring, being formed to a relatively great thickness, said inner elastic ring including a sealing lip formed around the peripheral margin thereof and extending outwardly beyond the peripheral margin of said backing ring.

2. In a method of manufacturing a bearing sealing device for sealing the bearing assembly having an inner race, an outer race and an annular groove formed in one of the inner or outer race and adapted to be mounted in the outer and inner races on the bearing assembly, including the steps of securing a sealing material to a backing plate of iron, thereby forming a single unit, and using the press punch to punch the single unit out so that the resulting shape includes an elastic ring and a backing ring, the method including the steps of:
forming a backing blank from a metal;
forming a first sealing member to a relatively small thickness and securing said first sealing member to one side of said backing blank;
forming a second sealing member to a relatively great thickness and securing said second sealing member to the opposite side of said backing blank, thereby forming said backing blank, said first sealing member and said second sealing member as a single integral unit; and
using the press punch to punch said single integral unit out so that the resulting shape includes a backing ring and two elastic rings sandwiching said backing ring therebetween, the elastic ring located outside said backing ring, or the outer elastic ring, being formed to a relatively small thickness and the elastic ring located inside said backing ring, or the inner elastic ring, being formed to a relatively great thickness, said inner elastic ring including a sealing lip formed around the peripheral margin thereof and extending outwardly beyond the peripheral margin of said backing ring.
